# EUROPEAN PATENT SPECIFICATION

(11) **EP 3 858 626 B1**
(45) Date of publication and mention of the grant of the patent: **01.05.2024**
(21) Application number: 19868024.1
(22) Date of filing: 28.02.2019
(51) Int. Cl.: G06K 15/02, B41J 3/60, B41J 11/00, G03G 15/23, H04N 1/393, H04N 1/409, H04N 1/387

(54) **METHOD AND SYSTEM FOR DOUBLE-SIDED PRINTING**
VERFAHREN UND SYSTEM ZUM BEIDSEITIGEN DRUCKEN
PROCÉDÉ ET SYSTÈME D'IMPRESSION DOUBLE FACE

(30) Priority: 25.09.2018 CN 201811114677
(43) Date of publication of application: 04.08.2021
(73) Proprietor: Shenyang Sky Air-Ship Digital Printing Equipment Co., Ltd., Shenyang, Liaoning 110141 (CN)
(72) Inventor: LIANG, Jian, Shenyang, Liaoning 110141 (CN); WANG, Hui, Shenyang, Liaoning 110141 (CN)
(74) Representative: ABG Intellectual Property Law, S.L.
(86) International application number: PCT/CN2019/076514
(87) International publication number: WO 2020/062776

(56) References cited:
- EP-A1- 3 072 699
- EP-A1- 3 674 083
- JP-A- 2017 052 098
- US-A1- 2003 030 686
- US-A1- 2013 215 165

## Description

### TECHNICAL FIELD

The invention relates to the field of printing technologies, in particular to a method and a system for double-sided printing.

### BACKGROUND

A printing apparatus that can synchronously realize double-sided printing has been developed at present. In some application scenarios, two images that are mirror symmetrical or corresponding in other ways need to be printed on front and back sides of a printing material respectively, and then the printing material may be pasted on, for example, a surface of a light box after the two images are printed. When the light is not turned on during the daytime, a front side image is displayed; when the light in the light box is turned on at night, a back side image is transmitted to the front side under light irradiation to enhance a display effect of the front side image, so as to maintain consistency of a display effect of the light box in a whole day environment. However, an accurate alignment of the front and back side images is a challenging problem. In the prior art, it is not possible to guarantee that the front and back side images keep geometrically corresponding in all aspects, thereby reducing a use effect of a printed product.

US20030030686A1 discloses an image forming method and apparatus, the image forming method includes: the boundary lines formed on the recording medium being conveyed are detected by a sensor, distortion of the recording medium is evaluated on the basis of the detected boundary lines, and image data is corrected in accordance with the result of the evaluation and an image is formed in accordance with the corrected image data. In the above process, image data within the respective areas surrounded by the boundary lines is deformed such that the image is printed at a correct location even when the recording medium has distortion due to expansion/contraction.

EP3674083A1 discloses a textile double-sided inkjet printing method using a digital inkjet printer , and a textile, the inkjet printing method includes: importing a target pattern to a storage unit; 2) mirroring the target pattern to obtain a mirror target pattern, and storing the mirror target pattern to the storage unit; 3) placing a textile in a inkjet printing region of a guide belt, and printing the target pattern on the front side of the textile by means of a digital head to form a front-side printed pattern; 4) turning over the textile and placing same on the guide belt, acquiring a pattern penetrating the reverse side of the textile by using an image acquisition unit, and transmitting the pattern to the storage unit; 5) adjusting the mirror target pattern by means of a processing unit to align with the reverse-side pattern acquired by the image acquisition unit; and 6) printing the adjusted mirror target pattern on the reverse side of the textile by means of the digital head.

JP 2017 052098 A discloses an ink jet printer which includes: a conveyance mechanism which conveys a recording medium; and an inkjet head and inkjet head whose discharge direction of ink from a nozzle is downward in the vertical direction indicated by an arrow. The inkjet head performs printing on the surface of the recording medium whose surface is the upper surface in the vertical direction indicated by the arrow. The conveyance mechanism includes a direction change member and direction change member which change the front and rear surfaces of the recording medium so that the rear surface of the recording medium whose surface has been printed by the ink jet head becomes the upper surface in the vertical direction indicated by the arrow. The ink jet head performs printing on the rear surface of the recording medium whose rear surface is made to be the upper surface in the vertical direction indicated by the arrow by the direction change member and direction change member.

US 2013/215165 A1 discloses an automated print and image capture position adjustment. Particularly, a first registration mark is printed by a first printhead on print media at a first initial encoder value. A second registration mark is printed by a second printhead on print media at a second initial encoder value. The second registration mark is spaced apart from the first registration mark. The first and second registration marks are detected using the mark detection system as each is transported past the mark detection system. The displacement signal is used to measure a displacement of the print media between the detection of the second and first registration marks by the mark detection system. A cue delay value is determined for the second printhead so that a subsequently printed first image plane and a second image plane are registered relative to each other using the displacement, the first initial encoder value, and the second initial encoder value.

EP 3 072 699 A1 discloses an inkjet printing system that can reduce displacement in images to be printed on both sides of a medium. The inkjet printing system is provided with a front surface head that performs printing on a front surface of a medium, a rear surface head that performs printing on a rear surface of the medium to which printing has been performed by the front surface head, a front surface print controlling section that causes the front surface head to print an image including a front position mark for print control adjustment, a rear surface print controlling section that causes the rear surface head to print an image including a rear position mark for print control adjustment, and a displacement calibrating section that calibrates a displacement between the images to be printed on both sides of the medium. The displacement calibrating section calibrates the displacement between the images to be printed on both sides of the medium by adjusting print control by the rear surface print controlling section in accordance with an amount of displacement between the front position mark and the rear position mark.

### SUMMARY

To solve the above problems, the invention provides a method and a system for double-sided printing, which may keep front and back side images corresponding in position, shape and size, thereby improving alignment accuracy.

In first aspect, the present invention provides a method for double-sided printing, including: pre-determining a geometric difference between a first printed image printed by a first printer on a first side of a printing material on the basis of a first original and a second printed image to be printed by a second printer on a second side of the printing material on the basis of a second original; and adjusting the second original according to the geometric difference so as to align the first printed image with the second printed image, where the pre-determining a geometric difference between a first printed image printed by a first printer on a first side of a printing material on the basis of a first original and a second printed image to be printed by a second printer on a second side of the printing material on the basis of a second original includes: scanning or photographing the first printed image; and acquiring geometric changing information, relative to the first original, of the first printed image by comparing the first printed image with the first original, so as to pre-determine the geometric difference between the first printed image and the second printed image to be printed.

According to a specific embodiment of the present invention, the method further includes: printing, at a first position of a feeding path for double-sided printing, the first printed image on the first side on the basis of the first original; and printing, at a second position of the feeding path for double-sided printing, the second printed image on the second side on the basis of an adjusted second original.

According to a specific embodiment of the present invention, the scanning or photographing the first printed image includes: scanning the first printed image by a scanning device, and the scanning device is disposed on a printing carriage of a second printer for printing the second printed image and moves along with the printing carriage, a scanning lens of the scanning device aims at a part of the printing material not printed yet by the second printer.

According to a specific embodiment of the present invention, the scanning or photographing the first printed image includes: photographing the first printed image by at least one photographing device, and the at least one photographing device is on the feeding path and disposed between a first printer for printing the first printed image and a second printer for printing the second printed image.

In second aspect, the present invention provides a method for double-sided printing, including: pre-determining a geometric difference between a first printed image printed by a first printer on a first side of a printing material on the basis of a first original and a second printed image to be printed by a second printer on a second side of the printing material on the basis of a second original; and adjusting the second original according to the geometric difference so as to align the first printed image with the second printed image, the pre-determining a geometric difference between a first printed image printed by a first printer on a first side of a printing material on the basis of a first original and a second printed image to be printed by a second printer on a second side of the printing material on the basis of a second original includes: scanning or photographing the first printed image and a second printed image which has been printed on the second side of the printing material; and acquiring geometric changing information, relative to the first printed image, of the second printed image which has been printed by comparing the first printed image with the second printed image which has been printed, so as to pre-determine the geometric difference between the first printed image and the second printed image to be printed, the second printed image which has been printed includes a part of the second printed image which has been printed according to a part of the second original.

According to a specific embodiment of the present invention, the scanning or photographing the first printed image and a second printed image which has been printed on the second side of the printing material includes: scanning the first printed image and the second printed image which has been printed on the second side of the printing material by a scanning device, and the scanning device is disposed on a printing carriage of the second printer for printing the second printed image and moves along with the printing carriage, a scanning lens of the scanning device aims at a part of the printing material which has been printed by the second printer or a part of the printing material being printed by the second printer.

According to a specific embodiment of the present invention, the scanning or photographing the first printed image and a second printed image which has been printed on the second side of the printing material includes: photographing the first printed image and the second printed image which has been printed on the second side of the printing material by at least one photographing device, and the at least one photographing device is disposed over the second printer for printing the second printed image, and a photographing lens of the at least one photographing device aims at a part of the printing material which has been printed by the second printer or a part of the printing material being printed by the second printer.

In third aspect, the present invention provides a system for double-sided printing, including: a double-sided printing device configured to realize double-sided printing; and a controller configured to pre-determine a geometric difference between a first printed image printed by a first printer on a first side of a printing material on the basis of a first original and a second printed image to be printed by a second printer on a second side of the printing material on the basis of a second original, and adjust the second original of the second printed image according to the geometric difference, so as to align the first printed image with the second printed image printed by the double-sided printing device, the system further includes a scanning device configured to scan the first printed image, or, the system further includes at least one photographing device configured to photograph the first printed image, the controller is further configured to acquire geometric changing information, relative to the first original, of the first printed image by comparing the first printed image with the first original, so as to pre-determine the geometric difference between the first printed image and the second printed image to be printed.

According to a specific embodiment of the present invention, the double-sided printing device includes: a first printer disposed at a first position of a feeding path for double-sided printing, under a control of the controller, to print the first printed image on the first side of the printing material on the basis of the first original; and a second printer disposed at a second position of the feeding path for double-sided printing, under the control of the controller, to print the second printed image on the second side of the printing material on the basis of an adjusted second original.

According to a specific embodiment of the present invention, the double-sided printing device includes: a discharging roller and a receiving roller, the printing material forming the feeding path between the discharging roller and the receiving roller; a guiding roller disposed at bending points of the feeding path, to change a feeding direction of the printing material; and a feeding roller disposed between the discharging roller and the receiving roller, to drive the printing material step by step under a drive of a motor.

According to a specific embodiment of the present invention, the scanning device is disposed on a printing carriage of the second printer and moves along with the printing carriage, and a scanning lens of the scanning device aims at a part of the printing material not printed yet by the second printer.

According to a specific embodiment of the present invention, the at least one photographing device is on the feeding path and disposed between the first printer and the second printer.

In fourth aspect, the present invention provides a system for double-sided printing, including: a double-sided printing device configured to realize double-sided printing; and a controller configured to pre-determine a geometric difference between a first printed image printed by a first printer on a first side of a printing material on the basis of a first original and a second printed image to be printed by a second printer on a second side of the printing material on the basis of a second original, and adjust the second original of the second printed image according to the geometric difference, so as to align the first printed image with the second printed image printed by the double-sided printing device, the system further includes a scanning device (601) configured to scan the first printed image and a second printed image which has been printed on the second side of the printing material, or, the system further includes at least one photographing device (701) configured to photograph the first printed image and a second printed image which has been printed on the second side of the printing material, and the controller is further configured to acquire geometric changing information, relative to the first printed image, of the second printed image which has been printed by comparing the first printed image with the second printed image which has been printed, so as to pre-determine the geometric difference between the first printed image and the second printed image to be printed, the second printed image which has been printed includes a part of the second printed image which has been printed according to a part of the second original.

According to a specific embodiment of the present invention, the scanning device is disposed on a printing carriage of the second printer and moves along with the printing carriage, and a scanning lens of the scanning device aims at a part of the printing material which has been printed by the second printer or a part of the printing material being printed by the second printer.

According to a specific embodiment of the present invention, the at least one photographing device is disposed over the second printer, and a photographing lens of the at least one photographing device aims at a part of the printing material which has been printed by the second printer or a part of the printing material being printed by the second printer.

In the method and system for double-sided printing according to the present invention, an alignment error between the front and back sides in many aspects (including shape, size and position, etc.) can be judged and identified, so as to comprehensively obtain the geometric difference between the front and back sides. Thus, a more comprehensive and objective reference and basis for subsequent image adjustment and image correction may be provided, which is conducive to improving printing accuracy, thereby making the quality of double-sided printing products higher and more convenient for practical application.

### BRIEF DESCRIPTION OF DRAWINGS

The embodiments in the present invention may be described in detail as follows with reference to the following drawings:
FIG. 1 shows a schematic flowchart of a method for double-sided printing according to an embodiment in the present invention;
FIG. 2 shows a schematic flowchart of a method for double-sided printing according to an embodiment in the present invention;
FIG. 3 shows a schematic flowchart of a method for double-sided printing according to an embodiment in the present invention;
FIG. 4 shows a schematic flowchart of a method for double-sided printing according to an embodiment in the present invention;
FIG. 5 shows a schematic structural diagram of a system for double-sided printing according to an embodiment in the present invention;
FIG. 6 shows a schematic structural diagram of a system for double-sided printing according to an embodiment in the present invention;
FIG. 7 shows a schematic structural diagram of a system for double-sided printing according to an embodiment in the present invention;
FIG. 8 shows a schematic structural diagram of a system for double-sided printing according to an embodiment in the present invention.

### DETAILED DESCRIPTION OF THE EMBODIMENTS

To more clearly understand the concept and idea of the present invention for persons having ordinary skill in the art, the present invention may be described in detail with reference to specific embodiments. It should be appreciated that the embodiments described herein are only a part of all possible embodiments of the present invention. The invention is defined in the appended claims.

In the present invention, terms "first", "second" and other similar terms are not intended to imply any order, quantity and importance, but are used only to distinguish different components. In the present invention, terms "a", "one" and other similar terms are not intended to indicate the existence of only one thing, but are used to describe one of the things, which may have one or more. In the present invention, terms "comprise", "include" and other similar terms are intended to indicate logical interrelationships, but not to be indicate relationships of a spatial structure. For example, "A comprises B" is intended to indicate that B belongs to A logically, but not to be indicating that B is spatially located within A. In addition, the meanings of terms "comprise", "include" and other similar terms should be considered open rather than closed. For example, "A comprises B" is intended to indicate that B belongs to A, but B does not necessarily constitute all of A, and A may also comprise other element such as C, D and E.

The embodiments in the present invention provide a method and a system for double-sided printing. In the embodiments of the present invention, printing may mean a process of copying an original on a surface of a printing material. Types of printing may include laser printing, inkjet printing and stylus printing, etc. In the embodiments of the present invention, the original may refer to an original graphic image on which the printing is based, which may determine a shape of a final printed image. In some embodiments, the original may include a digital image or an analog image. In the embodiments of the present invention, the printing material may be paper, textiles and polymers (such as PVC (polyvinyl chloride), etc.). In the embodiments of the present invention, double-sided printing refers to synchronous printing the front and back sides during one feeding process of the printing material, and the front and back side images may be mirror symmetrical, or completely different images. In the embodiments of the present invention, synchronous double-sided printing may mean printing the front and back sides at the same time by two printing apparatuses vertically disposed in a same station, or printing the front and back sides successively by two printing apparatuses disposed in different stations.

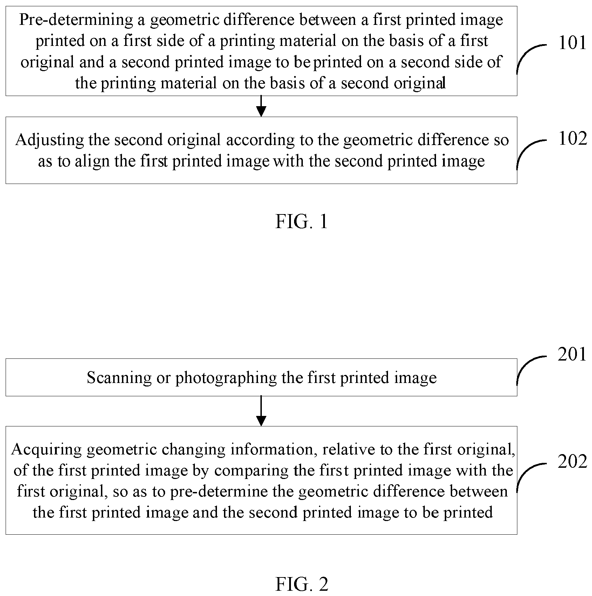

FIG. 1 shows a schematic flowchart of a method for double-sided printing according to an embodiment in the present invention. In this embodiment, the method for double-sided printing includes:
101, pre-determining a geometric difference between a first printed image printed on a first side of a printing material on the basis of a first original and a second printed image to be printed on a second side of the printing material on the basis of a second original; and
102, adjusting the second original according to the geometric difference so as to align the first printed image with the second printed image.

In this embodiment, the first side and the second side of the printing material may refer to opposite sides of the printing material. The first side may refer to a front side, which is usually used to display the printed images to the outside world due to surface characteristics, or may refer to a back side, which is not usually used to display the printed images to the outside world due to the surface characteristics. The back side may print no image or only print mirror images for enhancing a display effect of the front side image. In this embodiment, the first printed image and the second printed image may refer to actual images printed on surface structure of the printing material for display and use.

In this embodiment, the pre-determining the geometric difference means pre-determining the geometric difference between the first printed image and the second printed image before completion of printing the second printed image. The pre-determining may mean determining before any part of the second printed image which has been printed, or determining after a part of the second printed image which has been printed and before a remaining part of the second printed image which has not been printed yet. In this embodiment, determining the geometric difference may mean grasping a specific numerical value of the geometric difference, which may be used as an effective basis for adjusting the original.

In this embodiment, the geometric difference includes differences in three aspects of position, shape and size, and not only includes differences in one or two aspects of position, shape or size. The position difference may refer to a difference caused by an offset of an overall position of an image. The shape difference may refer to a difference caused by partial or total distortion or unequal scaling of an image. The size difference may refer to a difference caused by overall enlargement or reduction of a size of an image. In this embodiment, the geometric difference does not include a difference in color, such as differences in hue, saturation and brightness, and the geometric difference does not include a difference in printing quality, such as the difference in resolution.

In this embodiment, adjusting the second original may refer to modifying parameters of the second original to change it geometrically, including changing in position, size, and shape. In this embodiment, aligning the first printed image with the second printed image may mean that the first printed image and the second printed image are consistent in shape, size and position without stagger or offset, thereby eliminating or basically eliminating the geometric difference between the first printed image and the second printed image.

In the method for double-sided printing according to the present invention, the offset between the images on the front and back sides of the printing material may be comprehensively judged, and the differences in shape, size and position is grasped, so as to align the front and back side images more accurately.

In an embodiment of the present invention, the method for double-sided printing further includes:
printing, at a first position of a feeding path for double-sided printing, the first printed image on the first side on the basis of the first original; and
printing, at a second position of the feeding path for double-sided printing, the second printed image on the second side on the basis of an adjusted second original.

In this embodiment, the feeding path may refer to a conveyance path of the printing material during a printing process, for example, a path from a discharging roller to a receiving roller. The first position of the feeding path may refer to an upstream position of the feeding path, and the second position of the feeding path may refer to a downstream position of the feeding path. In this embodiment, the adjusted second original may refer to a second original adjusted according to the geometric difference. If no part of the second original has been printed, i.e., the second printed image has been not printed at all, the adjusted second original refers to a whole of the second original. If a part of the second original has been printed, i.e., a part of the second printed image has been generated, the adjusted second original refers to a part of the second original which has not been printed into the actual image yet.

In this embodiment, the first position and the second position are staggered on the feeding path, which makes the printing on the second side is later than that on the first side, so as to form an effect of printing the front and back sides of the printing material one after another. Thus, there is a time difference between the printing of the front and back sides, which may be used to adjust an apparatus for printing the second side, thereby improving the alignment accuracy of the printing.

FIG. 2 shows a schematic flowchart of a method for double-sided printing according to an embodiment in the present invention. The method for double-sided printing according to this embodiment includes an example of the step 101 in the method for double-sided printing according to the embodiment in FIG. 1, specifically including:
201, scanning or photographing the first printed image; and
202, acquiring geometric changing information, relative to the first original, of the first printed image by comparing the first printed image with the first original, so as to pre-determine the geometric difference between the first printed image and the second printed image to be printed.

In this embodiment, the scanning means transforming images into analog signals or digital signals by moving a lens from side to side, and the photographing means transforming the images into the analog signals or the digital signals by a fixed lens. In this embodiment, a device for scanning and a device for photographing may be the same image acquisition device or different image acquisition devices.

In this embodiment, the comparing the first printed image with the first original may mean comparing the first original with the first printed image obtained by photographing or scanning. When the first printed image and the first original are both digital images, digital image processing techniques, such as algorithms, may be used to compare them. In this embodiment, geometric change information may refer to change information in shape, size and position of the first printed image and the first original, or change information in shape, size, position and other geometric parameters of them.

In this embodiment, the determining the geometric difference by the geometric change information may mean taking the geometric change information, relative to the first original, of the first printed image as the geometric difference between the first printed image and the second printed image directly, may also mean transforming the geometric change information, relative to the first original, of the first printed image to the geometric difference between the first printed image and the second printed image by some algorithm. The reason why not using the geometric change information as the geometric difference directly is that, due to the printing apparatus or the printing materials, there are inherent differences in shape, size and position between the printed image and the original, and the printed image may always offset from the original. Therefore, the inherent differences should be taken into account when the geometric change information is applied to predict the geometric differences of the actual images. For example, the printing material may shrink after the first printing, which makes the printed image shrinks relative to the original, but the printing material may not shrink or shrink with a small extent after the second printing, thus a calculated magnitude of the geometric difference between the first printed image and the second printed image should be smaller than that of the first printed image relative to the first original. For another example, due to a shrinkage extent of the printing material after the first printing is smaller than that after the second printing, the calculated magnitude of the geometric difference between the first printed image and the second printed image should be larger than that of the first printed image relative to the first original.

In this embodiment, by scanning or photographing the first printed image, and then comparing the first printed image with the first original, the geometric difference between the printed image and the original may be measured and calculated from all aspects, thus the printing variation can be obtained comprehensively and objectively, which provides a reliable reference for the adjustment of the second original.

Another embodiment of the present invention is described below. The method for double-sided printing according to this embodiment includes an example of the step 201 in the method for double-sided printing according to the embodiment in FIG. 2, specifically including:
scanning the first printed image by a scanning device.

The scanning device is disposed on a printing carriage of a second printer for printing the second printed image and moves along with the printing carriage, and a scanning lens of the scanning device aims at a part of the printing material not printed yet by the second printer.

In this embodiment, the scanning device may refer to a device for transforming images into analog signals or digital signals by moving a lens from side to side. By using the scanning device according to the movement of the printer to collect the information of the first printed image, the movement and printing time of the printing apparatus can be fully utilized, so as to accurately read the details of each part of the first printed image, thereby accurately judging the geometric change information of the printed image.

As for additional details of this embodiment, the following description of the system for double-sided printing may be seen.

Another embodiment of the present invention is described below. The method for double-sided printing according to this embodiment includes an example of the step 201 in the method for double-sided printing according to the embodiment in FIG. 2, specifically including:
photographing the first printed image by at least one photographing device.

The at least one photographing device is on the feeding path and disposed between a first printer for printing the first printed image and a second printer for printing the second printed image.

In this embodiment, the photographing device may refer to a device for transforming images into analog signals or digital signals by a fixed lens. By photographing the first printed image by the fixed lens, an overall situation of the first printed image may be obtained more quickly and effectively, so as to leave enough time for parameter adjustment of the second printed image. Thus, an overall printing speed may be improved.

In this embodiment, the at least one photographing device may refer to one photographing device, or a plurality of photographing devices. When the plurality of photographing devices are used to photograph the first printed image, the position, shape and size information of the first printed image may be obtained more comprehensively, so as to judge the geometric change information, relative to the first original, of the first printed image more comprehensively and accurately.

As for additional details of this embodiment, the following description of the system for double-sided printing may be seen.

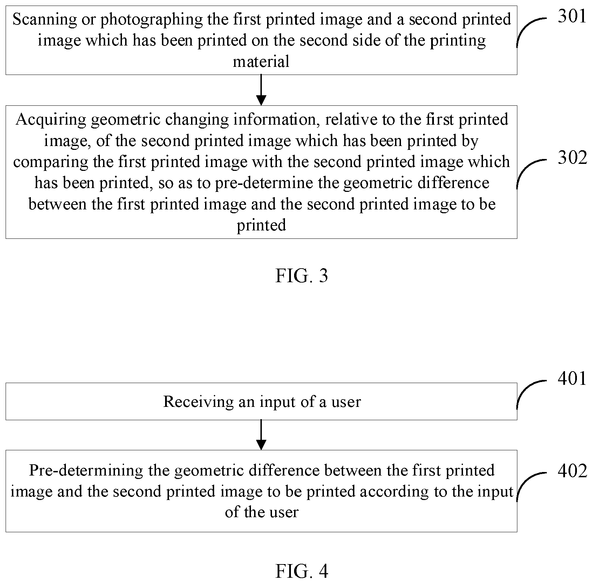

FIG. 3 is a schematic flowchart of a method for double-sided printing according to an embodiment in the present invention. The method for double-sided printing according to this embodiment includes an example of the step 101 in the method for double-sided printing according to the embodiment in FIG. 1, specifically including:
301, scanning or photographing the first printed image and a second printed image which has been printed on the second side of the printing material; and
302, acquiring geometric changing information, relative to the first printed image, of the second printed image which has been printed by comparing the first printed image with the second printed image which has been printed, so as to pre-determine the geometric difference between the first printed image and the second printed image to be printed.

In this embodiment, the second printed image which has been printed may refer to a part of the second printed image which has been printed according to a part of the second original. For example, the second printed image which has been printed may be merely a small part (less than 10%) of the second printed image printed first, or may be nearly half of a complete second printed image.

In this embodiment, comparing the first printed image with the second printed image which has been printed may refer to a comparison between the first printed image and the second printed image obtained by scanning or photographing. When the first printed image and the second printed image which has been printed obtained by scanning or photographing are both digital images, digital image processing techniques, such as algorithms, may be used to compare them. In this embodiment, geometric change information may refer to change information in shape, size and position of the first printed image and the second printed image which has been printed, or change information in shape, size, position and other geometric parameters of them. In this embodiment, the determining the geometric difference by the geometric change information may mean taking the geometric change information, relative to the second printed image which has been printed, of the first printed image as the geometric difference between the first printed image and the second printed image to be printed directly, may also mean taking the geometric change information, relative to the second printed image which has been printed, of the first printed image after appropriately adjusting according to a specific situation as the geometric difference between the first printed image and the second printed image to be printed.

In this embodiment, the difference between the front and back side images may be judged more accurately and objectively by comparing the first printed image and a part of the second the print image which has been actually printed, so as to eliminate the influence of the inherent defects of a printing system caused by the shrinkage of the printing material, etc., and obtain operational adjustment parameters more directly, thus reducing the amount of calculation and speeding up the reaction time. Generally speaking, even if there is a certain offset phenomenon between the part of the second printed image which has been printed and a corresponding part of the first printed image, since a speed of the image correction is faster than a feeding speed of the printer, the proportion of the part of an offset image may be controlled, so that there may be no obvious influence on the overall quality of the printed products.

Another embodiment of the present invention is described below. The method for double-sided printing according to this embodiment includes an example of the step 301 in the method for double-sided printing according to the embodiment in FIG. 3, specifically including:
scanning the first printed image and the second printed image which has been printed on the second side of the printing material by a scanning device.

The scanning device is disposed on a printing carriage of a second printer for printing the second printed image and moves along with the printing carriage, and a scanning lens of the scanning device aims at a part of the printing material which has been printed by the second printer or a part of the printing material being printed by the second printer.

In this embodiment, the scanning device may refer to a device for transforming images into analog signals or digital signals by moving a lens from side to side. By using the scanning device according to the movement of the printer to collect the information of the first printed image and the second printed image which has been printed, the movement and printing time of the printing apparatus can be fully utilized, so as to accurately read the details of each part of the first printed image, thereby accurately judging the geometric change information of the printed image.

When the scanning lens aims at the part of the printing material which has been printed by the second printer, since the scanning device captures more accurate to features of the printing material, such as surface texture and changes of light and shade, etc., the front and back side images may be collected by one scanning device at the same time, i.e., collecting the front side image facing the lens of the scanning device and the back side image penetrating from back at the same time. This is conducive to saving device resources, reducing device costs and improving production efficiency.

When the scanning lens aims at a part of the printing material being printed by the second printer, the offset of the second printed image may be found more quickly and timely by scanning the part of the second printed image being printed, so as to shorten the time experienced from the discovery of the geometric difference between the first printed image and the printed second printed image which has been printed to the adjustment of the second original, and reduce the part of the offset image, which is conducive to improving the overall quality of the printed products.

As for additional details of this embodiment, the following description of the system for double-sided printing may be seen.

Another embodiment of the present invention is described below. The method for double-sided printing according to this embodiment includes an example of the step 301 in the method for double-sided printing according to the embodiment in FIG. 3, specifically including:
photographing the first printed image and the second printed image which has been printed on the second side of the printing material by at least one photographing device.

The at least one photographing device is disposed over a second printer for printing the second printed image, and a photographing lens of the at least one photographing device aims at a part of the printing material which has been printed by the second printer or a part of the printing material being printed by the second printer.

In this embodiment, the photographing device may refer to a device for transforming images into analog signals or digital signals by a fixed lens. By photographing the first printed image and the second printed image which has been printed by the fixed lens, an overall situation of the first printed image and the second printed image which has been printed may be obtained more quickly and effectively, so as to leave enough time for parameter adjustment of the printing of the second side.

When the photographing lens aims at a part of the printing material being printed by the second printer, by photographing the part of the second printed image being printed, the offset of the second printed image may be quickly and timely found.

In this embodiment, the at least one photographing device may refer to one photographing device, or a plurality of photographing devices. When the plurality of photographing devices are used to photograph the first printed image, the position, shape and size information of the first printed image and the second printed image which has been printed may be obtained more comprehensively, so as to judge the geometric change information, relative to the first printed image, of the second printed image which has been printed more comprehensively and accurately.

As for additional details of this embodiment, the following description of a system for double-sided printing may be seen.

FIG. 4 shows a schematic flowchart of a method for double-sided printing according to an embodiment in the present invention. The method for double-sided printing according to this embodiment includes an example of the step 101 in the method for double-sided printing according to the embodiment in FIG. 1, specifically including:
401, receiving an input of a user; and
402, pre-determining the geometric difference between the first printed image and the second printed image to be printed according to the input of the user.

The input of the user is determined by the user by comparing the first printed image with a second printed image which has been printed on the second side of the printing material.

In this embodiment, the user may refer to an operator for performing the method for double-sided printing, or a user for using the system for double-sided printing. In this embodiment, the input of the user may mean the user inputs parameters reflecting the difference in shape, size and position between the first printed image and the second printed image to be printed to a controller, and the parameters may be such as distortion amount of shape, scaling amount of size, offset amount of position, etc. In this embodiment, the pre-determining the geometric difference according to the input of the user may refer to taking the input of the user as a value of the geometric difference directly, or taking the input of the user after appropriately adjusting according to a specific situation as the value of the geometric difference. In this embodiment, the comparing the first printed image with the second printed image which has been printed by the user may mean comparing by observing with the naked eye directly, or comparing with observing tools (for example, a magnifying glass or an electronic observation device).

In this embodiment, by pre-determining the geometric difference according to the input of the user to adjust the second original, the setting of an image acquisition device and an image comparison module in a printing controller can be eliminated, which is conducive to saving device resources. Especially for a printing scene (such as advertisement printing) where the misalignment of front and back images is not frequent, it is more economical and effective to use manual rather than automatic devices to distinguish an alignment error of the front and back sides.

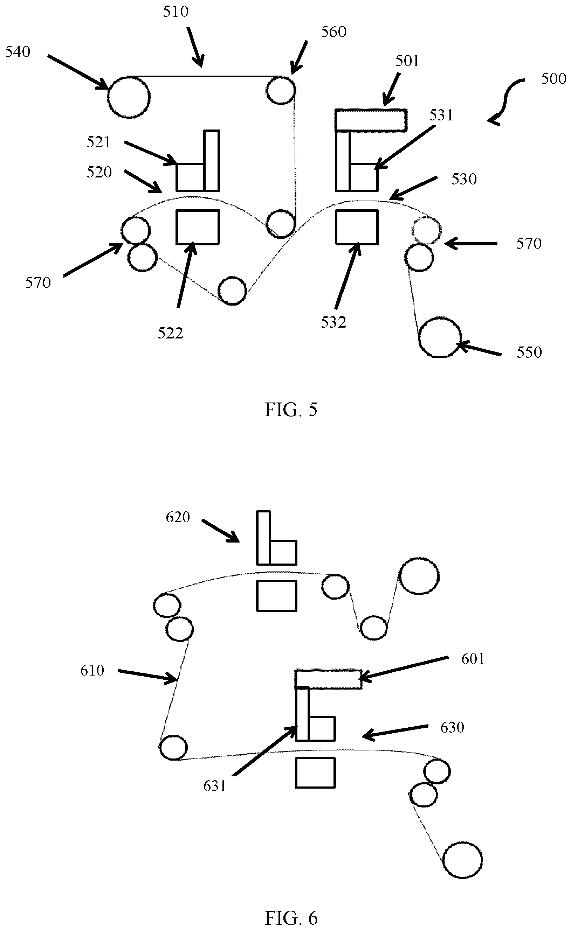

A system for double-sided printing according to several embodiments of the present invention is described below in combination with FIG. 5 to FIG. 8.

FIG. 5 is a schematic structural diagram of a system for double-sided printing according to an embodiment in the present invention. According to this embodiment, the system for double-sided printing includes:
a double-sided printing device 500 configured to realize double-sided printing; and
a controller (not shown) configured to pre-determine a geometric difference between a first printed image printed on a first side of a printing material 510 on the basis of a first original and a second printed image to be printed on a second side of the printing material 510 on the basis of a second original, and adjust the second original according to the geometric difference so as to align the first printed image with the second printed image printed by the double-sided printing device 500.

In this embodiment, the double-sided printing device 500 may refer to a device used to apply a printing ink on the front and back sides of the printing material 510 to form a printed image. Particularly, the double-sided printing device 500 may refer to a device capable of achieving simultaneous double-sided printing, i.e., a device that can simultaneously or successively print both sides of the printing material 510 during a complete feed process. In this embodiment, the controller may refer to a printing controller capable of controlling the printing effect of the double-sided printing device and having a function of image correction.

In this embodiment, by pre-determine the geometric difference between the first printed image and the second printed image to be printed by the controller, the offset between the images on the front and back side of the printing material can be comprehensively judged, and the difference in position, shape and size on both of them may be grasped, so as to align the front and back side images more accurately. In addition, the use of the controller can automatically realize a whole process of offset judgment and the image correction, which is conducive to reducing labor costs and improving printing efficiency.

As for additional details of this embodiment, the above description of the embodiment in FIG. 1 may be seen.

According to an embodiment of the present invention, the double-sided printing device 500 includes:
a first printer 520 disposed at a first position of a feeding path for double-sided printing, under the control of the controller, to print the first printed image on the first side of the printing material 510 on the basis of the first original; and
a second printer 530 disposed at a second position of the feeding path for double-sided printing, under the control of the controller, to print the second printed image on the second side of the printing material 510 on the basis of an adjusted second original.

In this embodiment, the first printer 520 includes a first printing carriage 521 and a first printing platform 522 disposed under the first printing carriage, and the second printer 530 includes a second printing carriage 531 and a second printing platform 532 disposed under the second printing carriage. In this embodiment, the printing carriage may be installed on a track beam, and the track beam may be installed on a printer frame. In this embodiment, the printing carriage may reciprocate along the track beam. In this embodiment, the first printer and the second printer may be inkjet printers, laser printers, stylus printers, etc.

As for advantages and additional details of this embodiment, the above descriptions of the first position and the second position may be seen.

According to an embodiment of the present invention, the double-sided printing device 500 includes:
a discharging roller 540 and a receiving roller 550, the printing material 510 forming the feeding path between the discharging roller 540 and the receiving roller 550;
a guiding roller 560 disposed at bending points of the feeding path, to change a feeding direction of the printing material 510; and
a feeding roller 570 disposed between the discharging roller 540 and the receiving roller 550, to drive the printing material 510 step by step under a drive of a motor.

In this embodiment, the discharging roller 540 is configured to discharge the printing material for printing, and the receiving roller 550 is configured to re-collect the printing material which has been printed. The feeding roller 570 has a power device, such as an electric motor, which can provide power for the printing material to keep it moving smoothly between the discharging roller and the receiving roller. In FIG. 5, the receiving rollers 570 are always paired, and the printing material 510 passes through the paired receiving rollers in an S-shape, thus achieving the reversal of the surface of the printing material. The guiding roller 560 is configured to guide a movement direction of the printing material and provide support for turning of the printing material in the feeding path.

In this embodiment, by setting different rollers to guide the movement of the printing material in the feeding path, it is conducive to improving the stability of the feeding of the printing material and improving the efficiency of double-sided printing.

According to an embodiment of the present invention, the system for double-sided printing further includes:
a scanning device 501 configured to scan the first printed image.

The controller acquires geometric changing information, relative to the first original, of the first printed image by comparing the first printed image with the first original, so as to pre-determine the geometric difference between the first printed image and the second printed image to be printed.

As for advantages and additional details of this embodiment, the above descriptions of the step 201 in the embodiment in FIG. 2 may be seen.

According to an embodiment of the present invention, the scanning device 501 is disposed on a printing carriage of the second printer 530 and moves along with the printing carriage, and a scanning lens of the scanning device 501 aims at a part of the printing material 510 not printed yet by the second printer 530.

As shown in FIG. 5, the scanning device 501 is disposed on the second printing carriage 531 of the second printer 530 and moves along with the second printing carriage 531 on the track beam, so as to scan the printing material while the second printing carriage 531 is printing. When the scanning lens of the scanning device 501 aims at the part of the printing material 510 not printed yet by the second printer 530, the scanning device can only scan the first printed image on the first side of the printing material 510. Since the first side of the printing material 510 is facing down at this time, the scanning device 501 scans the image transmitted through the back side.

By using the scanning device to scan the first printed image, the time of printing the second side of the printer can be fully utilized, so as to accurately read the geometric shape of the first printed image from the back side, thereby accurately calculating the geometric difference, relative to the first original, of the first printed image for subsequent adjustment.

According to an embodiment of the present invention, the system for double-sided printing further includes:
a scanning device 501 configured to scan the first printed image and a second printed image which has been printed on the second side of the printing material 510.

The controller acquires geometric changing information, relative to the first printed image, of the second printed image which has been printed by comparing the first printed image with the second printed image which has been printed, so as to pre-determine the geometric difference between the first printed image and the second printed image to be printed.

As for advantages and additional details of this embodiment, the above descriptions of the step 301 in the embodiment in FIG. 3 may be seen.

According to an embodiment of the present invention, the scanning device 501 is disposed on a printing carriage of the second printer 530 and moves along with the printing carriage, and a scanning lens of the scanning device 501 aims at a part of the printing material 510 which has been printed by the second printer 530 or a part of the printing material 510 being printed by the second printer 530.

As shown in FIG. 5, the scanning device 501 is disposed on the second printing carriage 531 of the second printer 530 and moves along with the second printing carriage 531 on the track beam, so as to scan the printing material while the second printing carriage 531 is printing.

When the scanning lens of the scanning device 501 aims at the part of the printing material 510 which has been printed by the second printer 530, the scanning device can scan the first printed image on the first side of the printing material 510 and the second printed image which has been printed on the second side of the printing material 510. Since the first side of the printing material 510 is facing down at this time, the scanning device 501 can simultaneously scan the second printed image on the front side and the first printed image transmitted through the back side. By using the scanning device to scan the second printed image which has been printed and the first printed image, the inherent error of the printing system can be eliminated, and the effect of the printed image can be directly compared, so as to obtain more objective and real geometric offsets, which may provide a more reliable basis for the subsequent image correction.

When the scanning lens of the scanning device 501 aims at the part of the printing material 510 being printed by the second printer 530, the scanning device can scan the first printed image on the first side of the printing material 510 and the second printed image being printed on the second side of the printing material 510. By using the scanning device to scan the second printed image being printed, the time experienced from identifying the geometric difference to adjusting the second original can be shortened, which is beneficial to reduce an area proportion of the part of the second printed image which has been printed and has been offset relative to the first printed image, thereby improving the overall quality of the printed products.

FIG. 6 shows a schematic structural diagram of a system for double-sided printing according to an embodiment in the present invention. In this embodiment, the scanning device 601 is also disposed on the second printing carriage 631 of the second printer 630 and moves along with the second printing carriage 631 on the track beam. The difference between this embodiment and the embodiment in FIG. 5 is that the feeding paths of the printing material are different and the positions of the printers and each roller are also different. The printing material 510 in the embodiment in FIG. 5 moves approximately from the top left to the bottom right, and the printing material 610 in this embodiment moves approximately from the top right to the bottom right. The first printer 520 and the second printer 530 in the embodiment in FIG. 5 are in a form of left and right arrangement, and the first printer 620 and the second printer 630 in this embodiment are in a form of up and down arrangement. Otherwise, the embodiment in FIG. 6 is basically the same as the embodiment in FIG. 5, which may not be repeated.

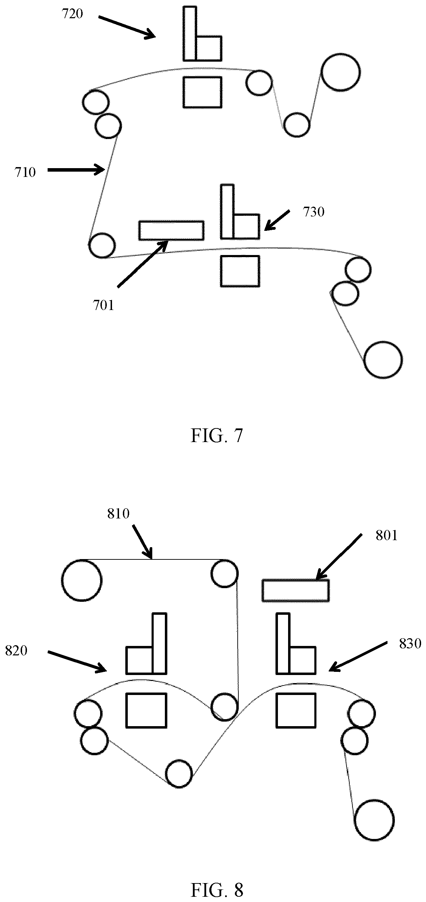

FIG. 7 is a schematic structural diagram of a system for double-sided printing according to an embodiment in the present invention. Except for the following description, the details of the embodiment in FIG. 7 are basically the same as the embodiment in FIG. 6, which may not be repeated. According to this embodiment, the system for double-sided printing further includes:
at least one photographing device 701 configured to photograph the first printed image.

The controller acquires geometric changing information, relative to the first original, of the first printed image by comparing the first printed image with the first original, so as to pre-determine the geometric difference between the first printed image and the second printed image to be printed.

As for advantages and additional details of this embodiment, the above descriptions of the step 201 in the embodiment in FIG. 2 may be seen.

According to an embodiment of the present invention, the at least one photographing device 701 is on the feeding path and disposed between the first printer 720 and the second printer 730.

As shown in FIG. 7, the photographing device 701 is arranged along the feeding path and disposed under the printing material 710, and a lens is directed towards the first side of the printing material 710. In this embodiment, by disposing the photographing device 701 between the first printer 720 and the second printer 730, the first printed image may be photographed before the second printer 730 prints, and the geometric variation of the images may be obtained by comparing the first printed image with the first original. This is beneficial to eliminate the possibility of offset of the second printed image as soon as possible and improve the alignment quality of the printed products.

In FIG.7, the photographing device 701 is arranged near the second printer 730 and between the first printer 720 and the second printer 730, which is to provide more time for the printing material that has just passed the first printer 720 to deform, so as to capture a more accurate geometric variation when photographing. Of course, in other embodiments, the photographing device 701 may also be arranged near the first printer 720 and between the first printer 720 and the second printer 730.

FIG. 8 is a schematic structural diagram of a system for double-sided printing according to an embodiment in the present invention. Except for the following description, the embodiment in FIG. 8 is basically the same as the embodiment in FIG. 7, which may not be repeated. According to this embodiment, the system for double-sided printing further includes:
at least one photographing device 801 configured to photograph the first printed image and a second printed image which has been printed on the second side of the printing material 810.

The controller acquires geometric changing information, relative to the first printed image, of the second printed image which has been printed by comparing the first printed image with the second printed image which has been printed, so as to pre-determine the geometric difference between the first printed image and the second printed image to be printed.

As for advantages and additional details of this embodiment, see the above descriptions in the embodiment in FIG. 3 may be seen.

According to an embodiment of the present invention, the at least one photographing device 801 is disposed over the second printer 830, and a photographing lens of the at least one photographing device 801 aims at a part of the printing material 810 which has been printed by the second printer 830 or a part of the printing material 810 being printed by the second printer 830.

As shown in FIG. 8, the first printer 820 is disposed in the upstream of the feeding path of the printing material 810, and the second printer 830 is disposed in the downstream of the feeding path. The photographing device 801 is fixed over the second printer 830 and does not move with the printing carriage of the second printer 830.

As for advantages and additional details of this embodiment, see the above descriptions of the step 301 in the embodiment in FIG. 3 may be seen.

According to an embodiment of the present invention, the controller receives an input of a user, and pre-determines the geometric difference between the first printed image and the second printed image to be printed. The input of the user is determined by the user by comparing the first printed image with a second printed image which has been printed on the second side of the printing material.

As for advantages and additional details of this embodiment, the above descriptions in the embodiment in FIG. 4 may be seen.

It should be appreciated for persons having ordinary skill in the art, although the above specific embodiments (including embodiments and examples) introduce a number of functional modules of a system for double-sided printing, this division is not mandatory. Actually, according to the embodiments of the present invention, the features and functions of two or more modules described above may be embodied in one module. Conversely, the features and functions of one module described above may be further embodied in multiple modules. It should be appreciated for persons having ordinary skill in the art that the technical solutions of the present invention may be implemented by software, specifically, by a computer program. For example, an executable code is stored in a storage medium such as RAM, ROM, hard disk, and/or any appropriate storage medium. When the executable code is executed, the functions mentioned in the above embodiments of the present invention may be achieved.

It should be noted that, the embodiments of the present invention may also be realized by hardware or a combination of software and hardware. The hardware may be implemented by using specialized logic; the software may be stored in a memory and executed by an appropriate instruction execution system, such as a microprocessor, or dedicated design hardware. It should be appreciated for persons having ordinary skill in the art that the device and method may be realized by using the computer executable instructions and/or control codes included in a processor, for example, such codes may be provided on a carrier medium such as a disk, CD or DVD-ROM, a programmable memory such as a read-only memory (firmware), or a data carrier such as an optical or electronic signal carrier. The device and the modules of the present invention may be realized by a hardware circuit, such as a very large scale integrated circuit or a gate array, a semiconductor such as a logic a chip, a transistor, etc., or a programmable hardware device such as a field programmable gate array, a programmable logic device, etc., or may be realized by software executed by various types of processors, may also be realized by a combination of the hardware circuit and the software such as firmware.

The concepts, principles and ideas of the present invention are described in detail in combination with the specific embodiments. It should be appreciated for persons having ordinary skill in the art that the embodiments of the present invention are not only the above forms, after reading this application document, persons having ordinary skill in the art may make any possible improvement, replacement or equivalent to the steps, methods, devices and components in the above embodiments, and such improvement, replacement or equivalent shall be considered to be within the scope of the present invention. The protection scope of the present invention is only subject to the claims.

## Claims

1. A method for double-sided printing, comprising
pre-determining (101) a geometric difference between a first printed image printed by a first printer (520, 620, 720, 820) on a first side of a printing material on the basis of a first original and a second printed image to be printed by a second printer (530, 630, 730, 830) on a second side of the printing material on the basis of a second original; and
adjusting (102) the second original according to the geometric difference so as to align the first printed image with the second printed image,
wherein the pre-determining a geometric difference between a first printed image printed by a first printer (520, 620, 720, 820) on a first side of a printing material on the basis of a first original and a second printed image to be printed by a second printer (530, 630, 730, 830) on a second side of the printing material on the basis of a second original comprises:
scanning or photographing (201) the first printed image; and
acquiring (202) geometric changing information, relative to the first original, of the first printed image by comparing the first printed image with the first original, so as to pre-determine the geometric difference between the first printed image and the second printed image to be printed.

2. The method according to claim 1, further comprising:
printing, at a first position of a feeding path for double-sided printing, the first printed image on the first side on the basis of the first original; and
printing, at a second position of the feeding path for double-sided printing, the second printed image on the second side on the basis of an adjusted second original.

3. The method according to claim 1, wherein the scanning or photographing the first printed image comprises:
scanning the first printed image by a scanning device,
wherein the scanning device is disposed on a printing carriage of the second printer (530, 630, 730, 830) for printing the second printed image and moves along with the printing carriage, and a scanning lens of the scanning device aims at a part of the printing material not printed yet by the second printer (530, 630, 730, 830).

4. The method according to claim 1, wherein the scanning or photographing the first printed image comprises:
photographing the first printed image by at least one photographing device (701),
wherein the at least one photographing device (701) is on the feeding path and disposed between the first printer (520, 620, 720, 820) for printing the first printed image and the second printer (530, 630, 730, 830) for printing the second printed image.

5. A method for double-sided printing, comprising
pre-determining (101) a geometric difference between a first printed image printed by a first printer (520, 620, 720, 820) on a first side of a printing material on the basis of a first original and a second printed image to be printed by a second printer (530, 630, 730, 830) on a second side of the printing material on the basis of a second original; and
adjusting (102) the second original according to the geometric difference so as to align the first printed image with the second printed image,
wherein the pre-determining a geometric difference between a first printed image printed by a first printer (520, 620, 720, 820) on a first side of a printing material on the basis of a first original and a second printed image to be printed by a second printer (530, 630, 730, 830) on a second side of the printing material on the basis of a second original comprises:
scanning or photographing (301) the first printed image and a second printed image which has been printed on the second side of the printing material; and
acquiring (302) geometric changing information, relative to the first printed image, of the second printed image which has been printed by comparing the first printed image with the second printed image which has been printed, so as to pre-determine the geometric difference between the first printed image and the second printed image to be printed,
wherein the second printed image which has been printed comprises a part of the second printed image which has been printed according to a part of the second original.

6. The method according to claim 5, wherein the scanning or photographing the first printed image and a second printed image which has been printed on the second side of the printing material comprises:
scanning the first printed image and the second printed image which has been printed on the second side of the printing material by a scanning device,
wherein the scanning device is disposed on a printing carriage of the second printer (530, 630, 730, 830) for printing the second printed image and moves along with the printing carriage, and a scanning lens of the scanning device aims at a part of the printing material which has been printed by the second printer (530, 630, 730, 830) or a part of the printing material being printed by the second printer (530, 630, 730, 830).

7. The method according to claim 5, wherein the scanning or photographing the first printed image and a second printed image which has been printed on the second side of the printing material comprises:
photographing the first printed image and the second printed image which has been printed on the second side of the printing material by at least one photographing device (701),
wherein the at least one photographing device (701) is disposed over the second printer (530, 630, 730, 830) for printing the second printed image, and a photographing lens of the at least one photographing device aims at a part of the printing material which has been printed by the second printer (530, 630, 730, 830) or a part of the printing material being printed by the second printer (530, 630, 730, 830).

8. A system for double-sided printing, comprising
a double-sided printing device (500) configured to realize double-sided printing; and
a controller configured to pre-determine a geometric difference between a first printed image printed by a first printer (520, 620, 720, 820) on a first side of a printing material (510, 610, 710, 810) on the basis of a first original and a second printed image to be printed by a second printer (530, 630, 730, 830) on a second side of the printing material (510, 610, 710, 810) on the basis of a second original, and adjust the second original of the second printed image according to the geometric difference, so as to align the first printed image with the second printed image printed by the double-sided printing device (500),
wherein the system further comprises a scanning device (501) configured to scan the first printed image, or, the system further comprises at least one photographing device (701) configured to photograph the first printed image,
the controller is further configured to acquire geometric changing information, relative to the first original, of the first printed image by comparing the first printed image with the first original, so as to pre-determine the geometric difference between the first printed image and the second printed image to be printed.

9. The system according to claim 8, wherein the double-sided printing device (500) comprises:
the first printer (520, 620, 720, 820) disposed at a first position of a feeding path for double-sided printing, under a control of the controller, to print the first printed image on the first side of the printing material (510, 610, 710, 810) on the basis of the first original; and
the second printer (530, 630, 730, 830) disposed at a second position of the feeding path for double-sided printing, under the control of the controller, to print the second printed image on the second side of the printing material (510, 610, 710, 810) on the basis of an adjusted second original.

10. The system according to claim 9, wherein the double-sided printing device (500) comprises:
a discharging roller (540) and a receiving roller (550), the printing material (510, 610, 710, 810) forming the feeding path between the discharging roller (540) and the receiving roller (550);
a guiding roller (560) disposed at bending points of the feeding path, to change a feeding direction of the printing material (510, 610, 710, 810); and
a feeding roller (570) disposed between the discharging roller (540) and the receiving roller (550), to drive the printing material (510, 610, 710, 810) step by step under a drive of a motor.

11. The system according to claim 9 or 10, wherein the scanning device (501) is disposed on a printing carriage (531) of the second printer (530) and moves along with the printing carriage (531), and a scanning lens of the scanning device (501) aims at a part of the printing material (510) not printed yet by the second printer (530).

12. The system according to claim 9 or 10, wherein the at least one photographing device (701) is on the feeding path and disposed between the first printer (720) and the second printer (730).

13. A system for double-sided printing, comprising
a double-sided printing device (500) configured to realize double-sided printing; and
a controller configured to pre-determine a geometric difference between a first printed image printed by a first printer (520, 620, 720, 820) on a first side of a printing material (510, 610, 710, 810) on the basis of a first original and a second printed image to be printed by a second printer (530, 630, 730, 830) on a second side of the printing material (510, 610, 710, 810) on the basis of a second original, and adjust the second original of the second printed image according to the geometric difference, so as to align the first printed image with the second printed image printed by the double-sided printing device (500),
wherein the system further comprises a scanning device (601) configured to scan the first printed image and a second printed image which has been printed on the second side of the printing material (510, 610, 710, 810),
or, the system further comprises at least one photographing device (701) configured to photograph the first printed image and a second printed image which has been printed on the second side of the printing material (510, 610, 710, 810),
the controller is further configured to acquire geometric changing information, relative to the first printed image, of the second printed image which has been printed by comparing the first printed image with the second printed image which has been printed, so as to pre-determine the geometric difference between the first printed image and the second printed image to be printed,
wherein the second printed image which has been printed comprises a part of the second printed image which has been printed according to a part of the second original.

14. The system according to claim 13, wherein the scanning device (601) is disposed on a printing carriage (631) of the second printer (630) and moves along with the printing carriage (631), and a scanning lens of the scanning device (601) aims at a part of the printing material (610) which has been printed by the second printer (630) or a part of the printing material (610) being printed by the second printer (630).

15. The system according to 13, wherein the at least one photographing device (801) is disposed over the second printer (830), and a photographing lens of the at least one photographing device (801) aims at a part of the printing material (810) which has been printed by the second printer (830) or a part of the printing material (810) being printed by the second printer (830).

## Patentansprüche

1. Verfahren zum beidseitigen Drucken, umfassend:
Vorbestimmen (101) eines geometrischen Unterschieds zwischen einem ersten Druckbild, das von einem ersten Drucker (520, 620, 720, 820) auf einer ersten Seite eines Druckmaterials auf der Grundlage einer ersten Vorlage gedruckt wird, und einem zweiten Druckbild, das von einem zweiten Drucker (530, 630, 730, 830) auf einer zweiten Seite des Druckmaterials auf der Grundlage einer zweiten Vorlage zu drucken ist; und
Einstellen (102) der zweiten Vorlage gemäß dem geometrischen Unterschied, um das erste Druckbild auf das zweite Druckbild auszurichten,
wobei das Vorbestimmen eines geometrischen Unterschieds zwischen einem ersten Druckbild, das von einem ersten Drucker (520, 620, 720, 820) auf einer ersten Seite eines Druckmaterials auf der Grundlage einer ersten Vorlage gedruckt wird, und einem zweiten Druckbild, das von einem zweiten Drucker (530, 630, 730, 830) auf einer zweiten Seite des Druckmaterials auf der Grundlage einer zweiten Vorlage zu drucken ist, Folgendes umfasst:
Scannen oder Fotografieren (201) des ersten Druckbildes, und
Erfassen (202) von sich ändernden geometrischen Informationen des ersten Druckbildes gegenüber der ersten Vorlage durch Vergleichen des ersten Druckbildes mit der ersten Vorlage, um den geometrischen Unterschied zwischen dem ersten Druckbild und dem zu druckenden zweiten Druckbild vorherzubestimmen.

2. Verfahren nach Anspruch 1, ferner umfassend:
Drucken des ersten Druckbilds auf der ersten Seite auf der Grundlage der ersten Vorlage an einer ersten Position einer Zuführungsbahn zum beidseitigen Drucken, und
Drucken des zweiten Druckbildes auf der zweiten Seite auf der Grundlage einer angepassten zweiten Vorlage an einer zweiten Position der Zuführungsbahn zum beidseitigen Drucken.

3. Verfahren nach Anspruch 1, wobei das Scannen oder Fotografieren des ersten Druckbildes Folgendes umfasst:
Scannen des ersten Druckbildes durch eine Abtastvorrichtung,
wobei die Abtastvorrichtung auf einem Druckwagen des zweiten Druckers (530, 630, 730, 830) zum Drucken des zweiten Druckbildes angeordnet ist und sich zusammen mit dem Druckwagen bewegt, und eine Abtastlinse der Abtastvorrichtung auf einen Teil des Druckmaterials zielt, der noch nicht durch den zweiten Drucker (530, 630, 730, 830) gedruckt wurde.

4. Verfahren nach Anspruch 1, wobei das Scannen oder Fotografieren des ersten Druckbildes Folgendes umfasst:
Fotografieren des ersten Druckbildes durch mindestens eine Fotografiervorrichtung (701),
wobei sich die mindestens eine Fotografiervorrichtung (701) auf der Zuführungsbahn befindet und zwischen dem ersten Drucker (520, 620, 720, 820) zum Drucken des ersten Druckbildes und dem zweiten Drucker (530, 630, 730, 830) zum Drucken des zweiten Druckbildes angeordnet ist.

5. Verfahren zum beidseitigen Drucken, umfassend:
Vorbestimmen (101) eines geometrischen Unterschieds zwischen einem ersten Druckbild, das von einem ersten Drucker (520, 620, 720, 820) auf einer ersten Seite eines Druckmaterials auf der Grundlage einer ersten Vorlage gedruckt wird, und einem zweiten Druckbild, das von einem zweiten Drucker (530, 630, 730, 830) auf einer zweiten Seite des Druckmaterials auf der Grundlage einer zweiten Vorlage zu drucken ist; und
Einstellen (102) der zweiten Vorlage gemäß dem geometrischen Unterschied, um das erste Druckbild auf das zweite Druckbild auszurichten,
wobei das Vorbestimmen eines geometrischen Unterschieds zwischen einem ersten Druckbild, das von einem ersten Drucker (520, 620, 720, 820) auf einer ersten Seite eines Druckmaterials auf der Grundlage einer ersten Vorlage gedruckt wird, und einem zweiten Druckbild, das von einem zweiten Drucker (530, 630, 730, 830) auf einer zweiten Seite des Druckmaterials auf der Grundlage einer zweiten Vorlage zu drucken ist, Folgendes umfasst:
Scannen oder Fotografieren (301) des ersten Druckbildes und eines zweiten Druckbildes, das auf der zweiten Seite des Druckmaterials gedruckt wurde; und
Erfassen (302) von sich ändernden geometrischen Informationen des zweiten Druckbildes, das gedruckt wurde, gegenüber dem ersten Druckbild durch Vergleichen des ersten Druckbildes mit dem zweiten Druckbild, das gedruckt wurde, um den geometrischen Unterschied zwischen dem ersten Druckbild und dem zu druckenden zweiten Druckbild vorherzubestimmen,
wobei das zweite Druckbild, das gedruckt wurde, einen Teil des zweiten Druckbildes umfasst, der gemäß einem Teil der zweiten Vorlage gedruckt wurde.

6. Verfahren nach Anspruch 5, wobei das Scannen oder Fotografieren des ersten Druckbildes und eines zweiten Druckbildes, das auf der zweiten Seite des Druckmaterials gedruckt wurde, Folgendes umfasst:
Scannen des ersten Druckbildes und des zweiten Druckbildes, das auf der zweiten Seite des Druckmaterials gedruckt wurde, durch eine Abtastvorrichtung,
wobei die Abtastvorrichtung auf einem Druckwagen des zweiten Druckers (530, 630, 730, 830) zum Drucken des zweiten Druckbildes angeordnet ist und sich zusammen mit dem Druckwagen bewegt, und eine Abtastlinse der Abtastvorrichtung auf einen Teil des Druckmaterials zielt, der durch den zweiten Drucker (530, 630, 730, 830) gedruckt wurde, oder auf einen Teil des Druckmaterials zielt, der durch den zweiten Drucker (530, 630, 730, 830) gedruckt wird.

7. Verfahren nach Anspruch 5, wobei das Scannen oder Fotografieren des ersten Druckbildes und eines zweiten Druckbildes, das auf der zweiten Seite des Druckmaterials gedruckt wurde, Folgendes umfasst:
Fotografieren des ersten Druckbildes und des zweiten Druckbildes, das auf der zweiten Seite des Druckmaterials gedruckt wurde, durch mindestens eine Fotografiervorrichtung (701),
wobei die mindestens eine Fotografiervorrichtung (701) über dem zweiten Drucker (530, 630, 730, 830) zum Drucken des zweiten Druckbildes angeordnet ist und eine Fotografierlinse der mindestens einen Fotografiervorrichtung auf einen Teil des Druckmaterials zielt, der durch den zweiten Drucker (530, 630, 730, 830) gedruckt wurde, oder auf einen Teil des Druckmaterials zielt, der durch den zweiten Drucker (530, 630, 730, 830) gedruckt wird.

8. System zum beidseitigen Drucken, umfassend:
eine Vorrichtung (500) zum beidseitigen Drucken, die dazu ausgebildet ist, beidseitiges Drucken zu realisieren; und
eine Steuereinheit, die dazu ausgebildet ist, einen geometrischen Unterschied zwischen einem ersten Druckbild, das von einem ersten Drucker (520, 620, 720, 820) auf einer ersten Seite eines Druckmaterials (510, 610, 710, 810) auf der Basis einer ersten Vorlage gedruckt wird, und einem zweiten Druckbild, das von einem zweiten Drucker (530, 630, 730, 830) auf einer zweiten Seite des Druckmaterials (510, 610, 710, 810) auf der Grundlage einer zweiten Vorlage zu drucken ist, und die zweite Vorlage des zweiten Druckbildes gemäß dem geometrischen Unterschied einzustellen, um das erste Druckbild auf das zweite Druckbild auszurichten, das durch die Vorrichtung (500) zum beidseitigen Drucken gedruckt wird,
wobei das System ferner eine Abtastvorrichtung (501) umfasst, die dazu ausgebildet ist, das erste Druckbild zu scannen, oder wobei das System ferner mindestens eine Fotografiervorrichtung (701) umfasst, die dazu ausgebildet ist, das erste Druckbild zu fotografieren,
wobei die Steuereinheit ferner dazu ausgebildet ist, sich ändernde geometrische Informationen des ersten Druckbildes gegenüber der ersten Vorlage durch Vergleichen des ersten Druckbildes mit der ersten Vorlage zu erfassen, um den geometrischen Unterschied zwischen dem ersten Druckbild und dem zu druckenden zweiten Druckbild vorherzubestimmen.

9. System nach Anspruch 8, wobei die Vorrichtung (500) zum beidseitigen Drucken Folgendes umfasst:
den ersten Drucker (520, 620, 720, 820), der an einer ersten Position einer Zuführungsbahn zum beidseitigen Drucken angeordnet ist, unter einer Steuerung der Steuereinheit, um das erste Druckbild auf der ersten Seite des Druckmaterials (510, 610, 710, 810) auf der Grundlage der ersten Vorlage zu drucken; und
den zweiten Drucker (530, 630, 730, 830), der an einer zweiten Position der Zuführungsbahn zum beidseitigen Drucken angeordnet ist, unter der Steuerung der Steuereinheit, um das zweite Druckbild auf der zweiten Seite des Druckmaterials (510, 610, 710, 810) auf der Grundlage einer angepassten zweiten Vorlage zu drucken.

10. System nach Anspruch 9, wobei die Vorrichtung (500) zum beidseitigen Drucken Folgendes umfasst:
eine Ausgabewalze (540) und eine Aufnahmewalze (550), wobei das Druckmaterial (510, 610, 710, 810) die Zuführungsbahn zwischen der Ausgabewalze (540) und der Aufnahmewalze (550) bildet;
eine Führungswalze (560), die an Biegepunkten der Zuführungsbahn angeordnet ist, um eine Zuführrichtung des Druckmaterials (510, 610, 710, 810) zu ändern; und
eine Zuführwalze (570), die zwischen der Ausgabewalze (540) und der Aufnahmewalze (550) angeordnet ist, um das Druckmaterial (510, 610, 710, 810) Schritt für Schritt unter dem Antrieb eines Motors vorzutreiben.

11. System nach Anspruch 9 oder 10, wobei die Abtastvorrichtung (501) auf einem Druckwagen (531) des zweiten Druckers (530) angeordnet ist und sich zusammen mit dem Druckwagen (531) bewegt, und eine Abtastlinse der Abtastvorrichtung (501) auf einen Teil des Druckmaterials (510) zielt, der noch nicht von dem zweiten Drucker (530) bedruckt wurde.

12. System nach Anspruch 9 oder 10, wobei sich die mindestens eine Fotografiervorrichtung (701) auf der Zuführungsbahn befindet und zwischen dem ersten Drucker (720) und dem zweiten Drucker (730) angeordnet ist.

13. System zum beidseitigen Drucken, umfassend:
eine Vorrichtung (500) zum beidseitigen Drucken, die dazu ausgebildet ist, beidseitiges Drucken zu realisieren; und
eine Steuereinheit, die dazu ausgebildet ist, einen geometrischen Unterschied zwischen einem ersten Druckbild, das von einem ersten Drucker (520, 620, 720, 820) auf einer ersten Seite eines Druckmaterials (510, 610, 710, 810) auf der Grundlage einer ersten Vorlage gedruckt wird, und einem zweiten Druckbild, das von einem zweiten Drucker (530, 630, 730, 830) auf einer zweiten Seite des Druckmaterials (510, 610, 710, 810) auf der Grundlage einer zweiten Vorlage zu drucken ist, und die zweite Vorlage des zweiten Druckbildes gemäß dem geometrischen Unterschied einzustellen, um das erste Druckbild auf das zweite Druckbild auszurichten, das durch die Vorrichtung (500) zum beidseitigen Drucken gedruckt wird,
wobei das System ferner eine Abtastvorrichtung (601) umfasst, die dazu ausgebildet ist, das erste Druckbild und ein zweites Druckbild zu scannen, das auf der zweiten Seite des Druckmaterials (510, 610, 710, 810) gedruckt wurde,
oder wobei das System ferner mindestens eine Fotografiervorrichtung (701) umfasst, die dazu ausgebildet ist, das erste Druckbild und ein zweites Druckbild zu fotografieren, das auf der zweiten Seite des Druckmaterials (510, 610, 710, 810) gedruckt wurde,
wobei die Steuereinheit ferner dazu ausgebildet ist, sich ändernde geometrische Informationen des zweiten Druckbildes, das gedruckt wurde, gegenüber dem ersten Druckbild durch Vergleichen des ersten Druckbildes mit dem zweiten Druckbild, das gedruckt wurde, zu erfassen, um den geometrischen Unterschied zwischen dem ersten Druckbild und dem zu druckenden zweiten Druckbild vorherzubestimmen,
wobei das zweite Druckbild, das gedruckt wurde, einen Teil des zweiten Druckbildes umfasst, der gemäß einem Teil der zweiten Vorlage gedruckt wurde.

14. System nach Anspruch 13, wobei die Abtastvorrichtung (601) auf einem Druckwagen (631) des zweiten Druckers (630) angeordnet ist und sich zusammen mit dem Druckwagen (631) bewegt, und eine Abtastlinse der Abtastvorrichtung (601) auf einen Teil des Druckmaterials (610) zielt, der durch den zweiten Drucker (630) gedruckt wurde, oder auf einen Teil des Druckmaterials (610) zielt, der durch den zweiten Drucker (630) gedruckt wird.

15. System nach Anspruch 13, wobei die mindestens eine Fotografiervorrichtung (801) über dem zweiten Drucker (830) angeordnet ist und eine Fotografierlinse der mindestens einen Fotografiervorrichtung (801) auf einen Teil des Druckmaterials (810) zielt, der durch den zweiten Drucker (830) gedruckt wurde, oder auf einen Teil des Druckmaterials (810) zielt, der durch den zweiten Drucker (830) gedruckt wird.

## Revendications

1. Un procédé d'impression recto-verso, comprenant
le fait de prédéterminer (101) une différence géométrique entre une première image d'impression, qui est imprimée par une première imprimante (520, 620, 720, 820) sur une première face d'un support d'impression à partir d'un premier original, et une deuxième image d'impression destinée à être imprimée par une deuxième imprimante (530, 630, 730, 830) sur une deuxième face du support d'impression sur la base d'un deuxième original ; et
le fait d'ajuster (102) le deuxième original en fonction de la différence géométrique de manière à aligner la première image d'impression avec la deuxième image d'impression,
la prédétermination d'une différence géométrique entre une première image d'impression qui est imprimée par une première imprimante (520, 620, 720, 820) sur une première face d'un support d'impression sur la base d'un premier original et une deuxième image d'impression destinée à être imprimée par une deuxième imprimante (530, 630, 730, 830) sur une deuxième face du support d'impression sur la base d'un deuxième original comprenant :
le fait de numériser ou de photographier (201) la première image d'impression ; et
le fait d'acquérir (202) des informations de changement géométrique, par rapport au premier original, de la première image d'impression en comparant la première image d'impression avec le premier original, de manière à prédéterminer la différence géométrique entre la première image d'impression et la deuxième image d'impression destinée à être imprimée.

2. Le procédé selon la revendication 1, comprenant en outre :
le fait d'imprimer, au niveau d'une première position d'un chemin d'alimentation pour impression recto-verso, la première image d'impression sur la première face sur la base du premier original ; et
le fait d'imprimer, au niveau d'une deuxième position du chemin d'alimentation pour impression recto-verso, la deuxième image d'impression sur la deuxième face sur la base d'un deuxième original ajusté.

3. Le procédé selon la revendication 1, dans lequel la numérisation ou la photographie de la première image d'impression comprend :
le fait de numériser la première image d'impression par un appareil de numérisation,
le dispositif de numérisation étant disposé sur un chariot d'impression de la deuxième imprimante (530, 630, 730, 830) pour imprimer la deuxième image d'impression et se déplace avec le chariot d'impression, et une lentille de numérisation du dispositif de numérisation vise une partie du support d'impression non encore imprimée par la deuxième imprimante (530, 630, 730, 830).

4. Le procédé selon la revendication 1, dans lequel la numérisation ou la photographie de la première image d'impression comprend :
le fait de photographier la première image d'impression par au moins un dispositif de photographie (701),
ledit au moins un dispositif de photographie (701) étant sur le chemin d'alimentation et disposé entre la première imprimante (520, 620, 720, 820) pour imprimer la première image d'impression et la deuxième imprimante (530, 630, 730, 830) pour imprimer la deuxième image d'impression.

5. Un procédé d'impression recto-verso, comprenant
le fait de prédéterminer (101) une différence géométrique entre une première image d'impression qui est imprimée par une première imprimante (520, 620, 720, 820) sur une première face d'un support d'impression à partir d'un premier original et une deuxième image d'impression destinée à être imprimée par une deuxième imprimante (530, 630, 730, 830) sur une deuxième face du support d'impression sur la base d'un deuxième original ; et
le fait d'ajuster (102) le deuxième original en fonction de la différence géométrique de manière à aligner la première image d'impression avec la deuxième image d'impression,
la prédétermination d'une différence géométrique entre une première image d'impression qui est imprimée par une première imprimante (520, 620, 720, 820) sur une première face d'un support d'impression sur la base d'un premier original et une deuxième image d'impression destinée à être imprimée par une deuxième imprimante (530, 630, 730, 830) sur une deuxième face du support d'impression sur la base d'un deuxième original comprenant :
le fait de numériser ou de photographier (301) la première image d'impression et une deuxième image d'impression qui a été imprimée sur la deuxième face du support d'impression ; et
le fait d'acquérir (302) des informations de changement géométrique, par rapport à la première image d'impression, de la deuxième image d'impression qui a été imprimée en comparant la première image d'impression avec la deuxième image d'impression qui a été imprimée, de manière à prédéterminer la différence géométrique entre la première image d'impression et la deuxième image d'impression destinée à être imprimée,
la deuxième image d'impression qui a été imprimée comprenant une partie de la deuxième image d'impression qui a été imprimée selon une partie du deuxième original.

6. Le procédé selon la revendication 5, dans lequel la numérisation ou la photographie de la première image d'impression et d'une deuxième image d'impression qui a été imprimée sur la deuxième face du support d'impression comprend :
le fait de numériser la première image d'impression et la deuxième image d'impression qui a été imprimée sur la deuxième face du support d'impression par un dispositif de numérisation,
le dispositif de numérisation étant disposé sur un chariot d'impression de la deuxième imprimante (530, 630, 730, 830) pour imprimer la deuxième image d'impression et se déplaçant avec le chariot d'impression, et une lentille de numérisation du dispositif de numérisation visant une partie du support d'impression qui a été imprimée par la deuxième imprimante (530, 630, 730, 830) ou une partie du support d'impression imprimée par la deuxième imprimante (530, 630, 730, 830).

7. Le procédé selon la revendication 5, dans lequel la numérisation ou la photographie de la première image d'impression et d'une deuxième image d'impression qui a été imprimée sur la deuxième face du support d'impression comprend :
le fait de photographier la première image d'impression et la deuxième image d'impression qui a été imprimée sur la deuxième face du support d'impression par au moins un dispositif de photographie (701),
ledit au moins un dispositif photographique (701) étant disposé sur la deuxième imprimante (530, 630, 730, 830) pour imprimer la deuxième image d'impression, et un objectif photographique dudit au moins un dispositif photographique vise une partie du support d'impression qui a été imprimée par la deuxième imprimante (530, 630, 730, 830) ou une partie du support d'impression qui est imprimée par la deuxième imprimante (530, 630, 730, 830).

8. Un système d'impression recto-verso, comprenant
un dispositif d'impression recto-verso (500) configuré pour réaliser une impression recto-verso ; et
un contrôleur configuré pour prédéfinir une différence géométrique entre une première image d'impression, qui est imprimée par une première imprimante (520, 620, 720, 820) sur une première face d'un support d'impression (510, 610, 710, 810) sur la base d'un premier original, et une deuxième image d'impression destinée à être imprimée par une deuxième imprimante (530, 630, 730, 830) sur une deuxième face du support d'impression (510, 610, 710, 810) sur la base d'un deuxième original, et pour ajuster le deuxième original de la deuxième image d'impression en fonction de la différence géométrique, de manière à aligner la première image d'impression avec la deuxième image d'impression qui est imprimée par le dispositif d'impression recto-verso (500),
le système comprenant en outre un dispositif de numérisation (501) configuré pour numériser la première image d'impression, ou le système comprenant en outre au moins un dispositif de photographie (701) configuré pour photographier la première image d'impression,
le contrôleur étant en outre configuré pour acquérir des informations de changement géométrique, par rapport au premier original, de la première image d'impression en comparant la première image d'impression au premier original, de manière à prédéterminer la différence géométrique entre la première image d'impression et la deuxième image d'impression destinée à être imprimée.

9. Le système selon la revendication 8, dans lequel le dispositif d'impression recto-verso (500) comprend :
la première imprimante (520, 620, 720, 820), disposée en une première position d'un chemin d'alimentation pour une impression recto-verso, sous une commande du contrôleur, pour imprimer la première image d'impression sur la première face du support d'impression (510, 610, 710, 810) sur la base du premier original ; et
la deuxième imprimante (530, 630, 730, 830), disposée en une deuxième position du chemin d'alimentation pour une impression recto verso, sous le contrôle du contrôleur, pour imprimer la deuxième image d'impression sur la deuxième face du support d'impression (510, 610, 710, 810) sur la base d'un deuxième original ajusté.

10. Le système selon la revendication 9, dans lequel le dispositif d'impression recto-verso (500) comprend :
un rouleau de déchargement (540) et un rouleau de réception (550), le support d'impression (510, 610, 710, 810) formant le chemin d'alimentation entre le rouleau de déchargement (540) et le rouleau de réception (550) ;
un rouleau de guidage (560) disposé au niveau de points de courbure du trajet d'alimentation, pour changer une direction d'alimentation du support d'impression (510, 610, 710, 810) ; et
un rouleau d'alimentation (570) disposé entre le rouleau de déchargement (540) et le rouleau de réception (550), pour entraîner le support d'impression (510, 610, 710, 810) pas à pas sous l'entraînement d'un moteur.

11. Le système selon la revendication 9 ou 10, dans lequel le dispositif de numérisation (501) est disposé sur un chariot d'impression (531) de la deuxième imprimante (530) et se déplace avec le chariot d'impression (531), et une lentille de numérisation du dispositif de numérisation (501) vise une partie du support d'impression (510) non encore imprimée par la deuxième imprimante (530).

12. Le système selon la revendication 9 ou la revendication 10, dans lequel ledit au moins un dispositif de photographie (701) est sur le chemin d'alimentation et disposé entre la première imprimante (720) et la deuxième imprimante (730).

13. Un système d'impression recto-verso, comprenant :
un dispositif d'impression recto-verso (500) configuré pour réaliser une impression recto-verso ; et
un contrôleur configuré pour prédéfinir une différence géométrique entre une première image d'impression, qui est imprimée par une première imprimante (520, 620, 720, 820) sur une première face d'un support d'impression (510, 610, 710, 810) sur la base d'un premier original, et une deuxième image d'impression destinée à être imprimée par une deuxième imprimante (530, 630, 730, 830) sur une deuxième face du support d'impression (510, 610, 710, 810) sur la base d'un deuxième original, et pour ajuster le deuxième original de la deuxième image d'impression en fonction de la différence géométrique, de manière à aligner la première image d'impression avec la deuxième image d'impression qui est imprimée par le dispositif d'impression recto-verso (500),
le système comprenant en outre un dispositif de numérisation (601) configuré pour numériser la première image d'impression et une deuxième image d'impression qui a été imprimée sur la deuxième face du support d'impression (510, 610, 710, 810),
ou le système comprend en outre au moins un dispositif de photographie (701) configuré pour photographier la première image d'impression et une deuxième image d'impression qui a été imprimée sur la deuxième face du support d'impression (510, 610, 710, 810),
le contrôleur est en outre configuré pour acquérir des informations de changement géométrique, par rapport à la première image d'impression, de la deuxième image d'impression qui a été imprimée en comparant la première image d'impression avec la deuxième image d'impression qui a été imprimée, de manière à prédéterminer la différence géométrique entre la première image d'impression et la deuxième image d'impression destinée à être imprimée,
la deuxième image d'impression qui a été imprimée comprend une partie de la deuxième image d'impression qui a été imprimée selon une partie du deuxième original.

14. Le système selon la revendication 13, dans lequel le dispositif de numérisation (601) est disposé sur un chariot d'impression (631) de la deuxième imprimante (630) et se déplace avec le chariot d'impression (631), et une lentille de numérisation du dispositif de numérisation (601) vise une partie du support d'impression (610) qui a été imprimée par la deuxième imprimante (630) ou une partie du support d'impression (610) en cours d'impression par la deuxième imprimante (630).

15. Le système selon la revendication 13, dans lequel ledit au moins un dispositif photographique (801) est disposé sur la deuxième imprimante (830), et un objectif photographique dudit au moins un dispositif photographique (801) vise une partie du support d'impression (810) qui a été imprimé par la deuxième imprimante (830) ou une partie du support d'impression (810) en cours d'impression par la deuxième imprimante (830).
